# EUROPEAN PATENT SPECIFICATION

(11) **EP 1 402 943 B1**
(45) Date of publication and mention of the grant of the patent: **10.04.2013**
(21) Application number: 03077987.0
(22) Date of filing: 20.08.1999
(51) Int. Cl.: B01J 20/26, B01D 53/02, B01J 20/28

(54) **Filters employing porous strongly acidic polymers**
Filter das poröse stark saure Polymere enthält
Filtres utilisant des polymères fortement acides poreux

(30) Priority: 20.08.1998 US 97215
(43) Date of publication of application: 31.03.2004
(62) Divisional of application: 99943864.1
(73) Proprietor: Entegris, Inc., Billerica, MA 01821-4600 (US)
(72) Inventor: Kishkovich, Oleg, Greenville, RI 02828 (US); Rezuke, Robert, Grafton, Ma 01536 (US); Kinkead, Kevin, Holliston, MA 01746 (US)
(74) Representative: Greenwood, John David

(56) References cited:
- US-A- 3 409 691
- US-A- 4 313 832
- US-A- 4 808 202
- US-A- 5 753 345
- US-A- 5 772 738

## Description

### BACKGROUND OF THE INVENTION

In this age of increased air pollution, the removal of chemicals from the air we breathe is a concern of everyone. In addition, in the fabrication electronic materials and of devices such as semiconductors, there is a requirement for uncontaminated air of high quality.

Gas phase filtration is commonly accomplished using activated carbon manufactured in various ways. One approach uses a carbon/adhesive slurry to glue the carbon to the substrate. The adhesive decreases carbon performance by forming a film on its surface.

A second approach involves carbonizing an organic based web by heating, followed by carbon activation. This material is expensive and has relatively low adsorption capacity.

A third approach involves forming a slurry of carbon powders and fibers into sheets by a process analogous to a wet papermaking process. This material has a medium-to-high cost, and has an undesirable high pressure drop. Moreover, chemically impregnated carbon particles cannot be efficiently used in conjunction with an aqueous process, as the aqueous nature of the process either washes away the chemical used to impregnate the carbon, or reacts undesirable with the impregnating or active chemical groups thereby rendering it inoperative. In general, however, filter materials which do not incorporate chemically active groups perform far less effectively than those which do include chemically active groups.

None of these approaches fully achieve the desired properties which provide a clean, cost effective, high efficiency, low pressure drop, adsorptive composite.

US-A-4,808,202 discloses an adsorptive fiber sheet where a nonwoven fabric of synthetic fiber is constituted only by synthetic fiber having a higher melting temperature is secured in a layered structure to at least one surface of a nonwoven fabric of adsorptive fiber which is produced in such a manner that synthetic fiber having a higher melting temperature, synthetic fiber having a lower melting temperature and adsorptive fiber are mixed with one another and contact points between the synthetic fiber having a lower melting temperature and other fibers are bound together by softening the synthetic fiber having a lower melting temperature. Both the synthetic fabrics are placed one above another in a layered structure by allowing synthetic fiber having a lower melting temperature to be softened to bind or by allowing fibers to be entangled with one another in such a manner that no separation takes place therebetween.

US-A-5,772,738 discloses a multifunctional air filter module including a filter case having an air introduction side opening and an air discharge side opening and a pleated fabric air filter element containing an activated carbon. The periphery of the pleated filter element is fixed in the filter case without clearance therebetween. At least one fabric filter element composed of a fabric including an activated carbon having a strong base, KMnO₄ or ZnCl₂, a fabric of a cation exchange fiber or a fabric of an anion exchange fiber, is simply placed in air introduction side grooves formed by pleats of the fixed air filter element, and is replaceable and can be regenerated. The air filter module is compact and can reduce the volume of a space occupied thereby in a semiconductor plant. Flexibility of installation thus is provided and the range of the use thereof is widened. Multifunctionality is increased easily merely by addition of replaceable filter element fabrics.

### SUMMARY OF THE INVENTION

The present invention comprises a clean, cost effective, high efficiency, low pressure drop, adsorptive, filter comprising a high surface area, highly acidic chemically impregnated adsorbent. The invention employs a non-woven composite material having sulfonic acidic groups that bind to airborne bases. The invention can be used in lithography systems which employ materials that are sensitive to impurities, such as molecular bases present in the air circulating through semiconductor wafer processing equipment A large number of bases including ammonia, NMP, triethylamine pyridine, and others, can be maintained at concentrations below 2 ppb in a tool cluster filtered with, or including a filter of, the present invention.

In a preferred embodiment of this invention the non-woven carrier materials can be polyester non-wovens, and the adsorbent includes sulfonated divinyl benzene styrene copolymer. The sulfonic acidic groups have at least 1 milliequivalent/gram acidity level or higher and preferably at least 4.0 milliequivalents/gram or higher. The polymers used are porous, preferably having a pore size in the range of 50-400 angstroms and a surface area of 20m²/g or higher.

Dry processing of a non-woven polyester batting, in the manufacture of filter according to the present invention, allows for even distribution of adsorbent particles throughout the depth of the polyester batting. This provides an increased bed depth at a very low pressure drop, which is highly desirable since a twofold increase in bed depth can increase the filter's breakthrough time (time to failure) fourfold, when using these thin fabric based sulfonic beds.

Thus, this provides a clean, cost effective, high efficiency, low pressure drop, adsorptive non-woven filter composite. The novel filter composite is particularly useful for the removal of base contaminants in an air stream, which contaminants can be gaseous or vaporous. Particulates will also be removed if greater than the pore size of the filter. The filter has a service life of at least 12 months with a pressure drop to reduce power consumption and minimize impact on the systems operation. For example, a high pressure drop filter can require a longer time for a lithography system to equilibrate the temperature and humidity after filter replacement.

In an alternative embodiment, the filter uses both sulfonated divinyl benzene styrene copolymer and an activated carbon as the adsorbent. Activated carbon is discussed in greater detail in U.S. Patent No. 5,582,865 titled "Non-Woven Filter Composite." The filter in this preferred embodiment has two (or more) layers, one of activated carbon and one of sulfonated divinyl benzene styrene copolymer beads. Additionally, two or more materials can be mixed to provide the filter system of the present invention.

A detection system and method of use for determining when the filter needs to be replaced by detecting base contaminants in air is described in U.S. Patent Application No. 09/232,199 entitled "Detection of Base Contaminants in Gas Samples", filed on January 14, 1999 with Oleg Kishkovich, et al as inventors. Also U.S. Patent Application No. 08/795,949 entitled "Detecting of Base Contaminants", filed February 28, 1997 with Oleg Kishkovich, et al as inventors and U.S. Patent Application No. 08/996,790 entitled "Protection of Semiconductor Fabrication and Similar Sensitive Processes", filed December 23,1997 with Oleg Kishkovick et al as inventors can also be used with the present invention. These patent applications disclose the protection of a DUV lithography processes using chemically amplified photoresists which are sensitive to amines in the air.

A method of fabricating a filter element having a large surface area and the desired flow characteristics involves the use of a powdered material that is deposited in sequential layers one on top of the other. Following the deposit of each layer of powdered material, a binder material is delivered onto each layer of powdered material using a printing technique in accordance with a computer model of the three dimensional filter element being formed. Following the sequential application of all of the required powder layers and binder material to form the part in question, the unbound powder is appropriately removed, resulting in the formation of the desired three dimensional filter element. This technique provides for the fabrication of complex unitary or composite filter elements having high surface area that are formed with a very high degree of resolution.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
FIG. 1 is a perspective view of a filter of this invention before heating and calendaring;
FIG. 2A is a perspective view of the apparatus of a filter this invention after heating and calendaring;
FIG. 2B is a perspective view of a filter of this invention after heating and calendaring with a cover sheet;
FIG. 3A is a perspective view of a filter of this invention in a square or rectangular containment structure showing the creases of the pleated structure;
FIG. 3B is a top view of a filter this invention showing its pleated structure;
FIG. 4 is a top view of a filter of this invention with a high first pass efficiency multi-pleat pack panel filter in a square or rectangular containment structure;
FIG. 5A is a top view of a filter of this invention in a radially pleated cylindrical containment structure,
FIG. 5B is top view of a filter invention in a media-wrapped cylindrical filter; and
FIG. 6 is a perspective view of a process of producing a filter of the invention.
FIG. 7 is a pleated filter made in accordance with the invention.
FIG. 8 is a graphical illustration comprising the base removal efficiency of filters previously available and a filter made in accordance with the invention.
FIG. 9 is a process for fabricating a filter in accordance with a preferred embodiment of the filter of this invention.
FIG. 10 illustrates an example of a three dimensional filter of the present invention.

### DETAILED DESCRIPTION OF THE INVENTION

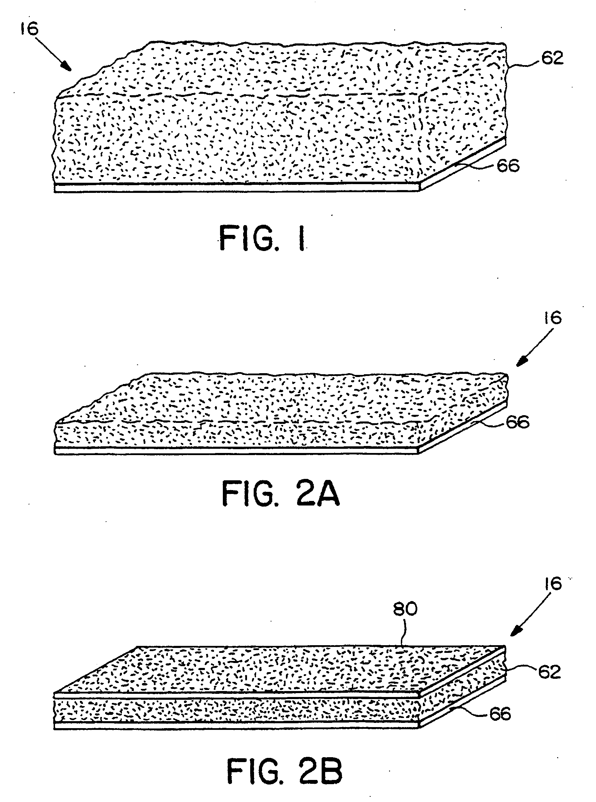

Referring to FIG. 1, a portion of a composite 16 is shown. The composite 16 has a cover sheet 66 and a middle layer 62. In a preferred embodiment, the cover sheet 66 is a polyester non woven having a binder to fiber ratio of 55/44 and a thickness of 0.024 inches. The middle layer 62 is air-laid polyester non woven having a thickness of 6,35 mm (0.25 inches) and binder to fiber ratio of 35%/65%. The composite is impregnated with a porous acidic polymer material that binds readily with molecular bases in air flowing through the filter.

The structure of FIG. 2A can be used directly in this form as the composite filter element. The composite 16, in a preferred embodiment employs a second cover sheet 80, provided on the surface of middle layer 62, opposite to the first cover sheet 66 backing 12, as shown in FIG. 2B. Alternatively, a second cover sheet 14a, can be provided over the backing layer 12, as shown in FIG, 2C. The cover sheet can be a filtering or non-filtering non-woven polyester, polyamide or polypropylene material or other similar materials. If the cover sheet is a filtering material, it serves to provide some filtering of the air entering the composite structure for removal of particulate materials in the air stream. The cover can also serve to retain the porous acidic polymer material such as a sulfonated divinyl benzene styrene copolymer, which is in bead form, within the middle layer or batting 62. The cover sheets can also be chemically inert materials such as polypropylene.

The composite 16, can be contained within any suitable container or frame work for installation in an intended position for filtering operation, typically in the form of a removable or replaceable filter element. For many purposes, it is preferable to increase the surface area of the filter material exposed to an incident air flow, and for this purpose the composite can be pleated to provide the increased surface area.

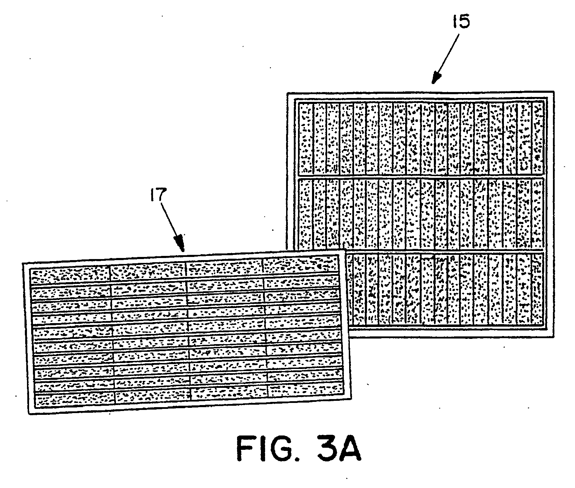

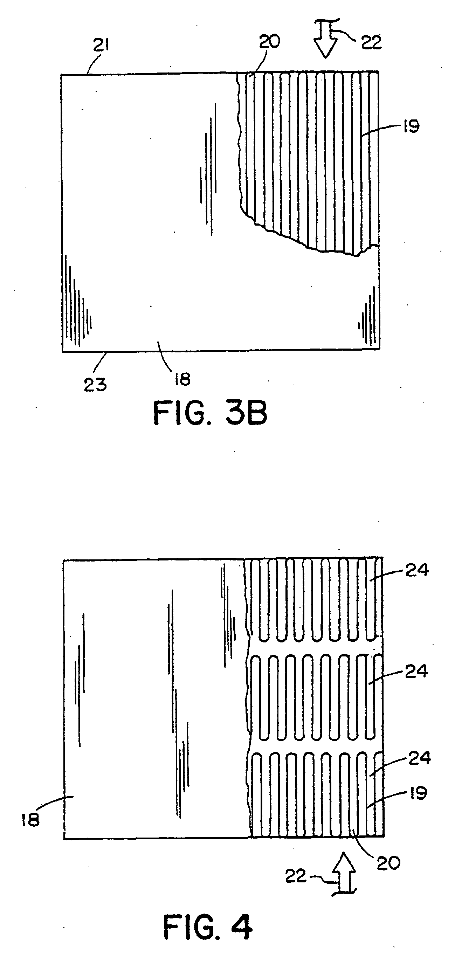

One embodiment is shown in FIG. 3A, in which the composite material forms an air filter 15 or 17. The filter material is pleated into an accordion like structure 19 as shown in FIG. 3B, contained within a square or rectangular container 18, having a front 21, and back 23, which are open to an air stream shown by arrow 22. The pleating 20 is substantially perpendicular to the air flow. FIG. 3A shows the structure in a front or back view. FIG. 3B shows a cutaway top view of a filter structure.

An alternative embodiment is shown in FIG. 4 wherein a plurality of pleated composite elements 24, are sequentially disposed within container 18, to provide a multi-stage filter through which the air can pass. As in the above embodiment, the pleats 20, of the elements 24, are substantially perpendicular to the direction of air flow 22.

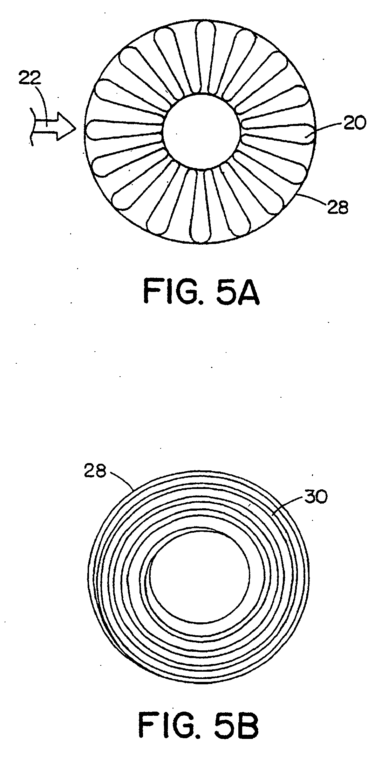

A further embodiment is shown in FIG. 5A, wherein the composite structure 16, is disposed in a cylindrical configuration and retained within a cylindrical container 28. The pleats 20, are as described above, substantially perpendicular to a radially directed air flow. A further embodiment is shown in FIG. 5B wherein the composite structure is wound in a spiral configuration 30, contained within a generally cylindrical container 28.

In a preferred embodiment, adsorbent particles are evenly distributed throughout the non-woven or fiber matrix or polyester batting. An example of an adsorbent particle includes but is not limited to sulfonated divinyl benzene styrene copolymer.

In a preferred embodiment, the ion exchange strongly acidic preliminary catalyst has the important properties including a particle size of between 0.3 and 1.2 mm, a porosity of approximately 0.30 ml/g, and an average pore diameter of 250 Å. The catalyst preferably has a higher porosity of up to 300 ml/g, or higher. In addition in a preferred embodiment has the properties of concentration of acid sites of approximately 1.8 meq/ml and surface area of 45 m²/g. One such catalyst is sold under the tradename AMBERLYST® 15DRY or AMBERLYST® 35DRY by Rohm and Haas.

Overall, the dry processing of the fiber matrix, which includes the combination of the fluidized bed sulfonated divinyl benzene styrene copolymer deposition process, the inherent stratification of the batting's density, and the even distribution of the sulfonated divinyl benzene styrene copolymer particles as well as stratification of the sulfonated divinyl benzene styrene copolymer particle size, allows for a fabric architecture having an increased bed depth at a very low pressure drop, which is highly desirable due to its high first pass efficiency coupled with its low operating cost.

The term "efficiency" as employed herein is defined by the formula X-Y/X wherein X is the upstream concentration of pollutant, and Y is the downstream concentration of pollutant.

It is recognized that the filter can have a mix of an activated carbon and the preliminary catalyst material discussed above. This combination has sufficient porosity and strongly acidic groups to provide easy permanent removal of medium and strong bases and sufficient retention of weak bases from the airborne base contaminants. The filter can also include a porous polymer material.

The filter as described is employed in filtering the air in environments such as semiconductor fabrication systems where there is a requirement for uncontaminated air of high quality.

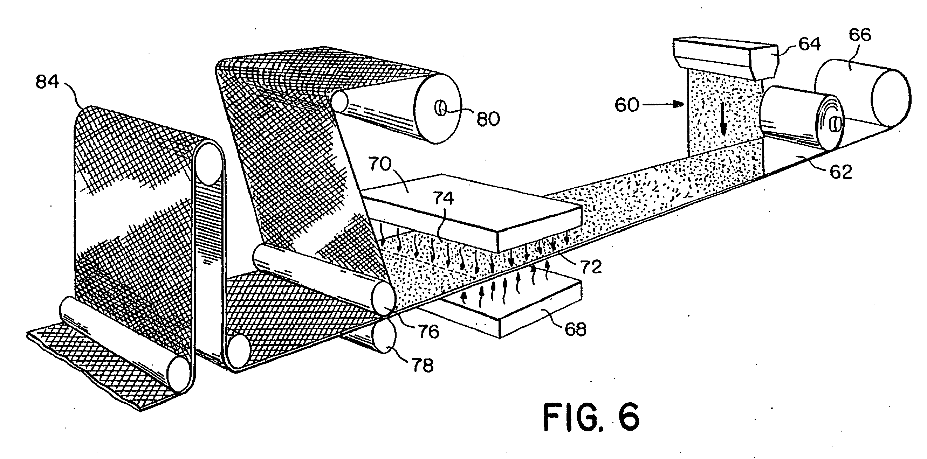

Referring to Fig. 6, the middle air-laid polyester non woven lay 62 is collated to a cover sheet 66. The adsorbent particles 60 are positioned on a fiber matrix 62 from a fluidized bed 64. The sulfonated divinyl benzene styrene copolymer particles 60 are evenly stratified throughout the depth of the batting 62. As discussed above, an increased bed depth of adsorbent particles distributed throughout the batting is highly desirable as it increases residence time, increases exposure of the adsorbent particle surfaces, provides a low pressure drop, as well as substantially increasing the lifetime of the filter.

The adsorbent particles 60 distributed in the matrix 62 are then heated, preferably using two zones 68, 70 of infrared energy at different wavelengths. The batting 62 is heated to an overall average temperature of between 250° and 350° F.

The infrared energy causes the adsorbent particles to adhere to the batting at points where the particles contact the batting. This procedure avoids the necessity of raising the temperature of the entire batting to a point at, or near, the melting point of the polyester batting, which could cause the batting to melt and collapse thereby encasing the particles and destroying their chemical activity.

The batting 62 is then calendared using a pair of calender rolls 76,78. The first of these rolls 76 can be temperature controlled which allows the heating and calendering steps to be carried out at a steady temperature of around 140°, and prevents overheating and subsequent melting of cover sheet and prevents over calendering of the fabric. The second roll, roll 78, is a rubber roll having a durometer that avoids crushing of the adsorbent particles.

Furthermore, when the temperature controlled roller 76 is used, the pressure at which the batting is 2000 pounds across the 26 inch distance. Higher calendaring pressures can crush the particles particularly when those particles are activated carbon based, thereby forming dust, which cannot be retained in the filter composite and can consequently pass into the gas stream.

In addition, a synthetic non-woven cover sheet 80, which helps to maintain the sulfonated divinyl benzene styrene copolymer in the batting, may be calendared with the batting 62, as discussed above. After the filter is formed, gussets or spacers are placed in the filter. The filter is sealed into a metal box.

Optionally, the material may be.conducted over an upper roller 84 to facilitate cooling the material prior to further processing. The method of manufacture for an activated carbon filter is described in detail in U.S. Patent No. 5,582,865 titled "Non-Woven Filter Composite."

While the above described method is a preferred method of creating the filter, it is recognized that other techniques can be used. Some of these techniques include those developed by Hoechst such as that described in U.S. Patent No. 5,605,746 or KX Media. The common feature in all these methods are the incorporation of a chemically active sorbent into a porous media structure.

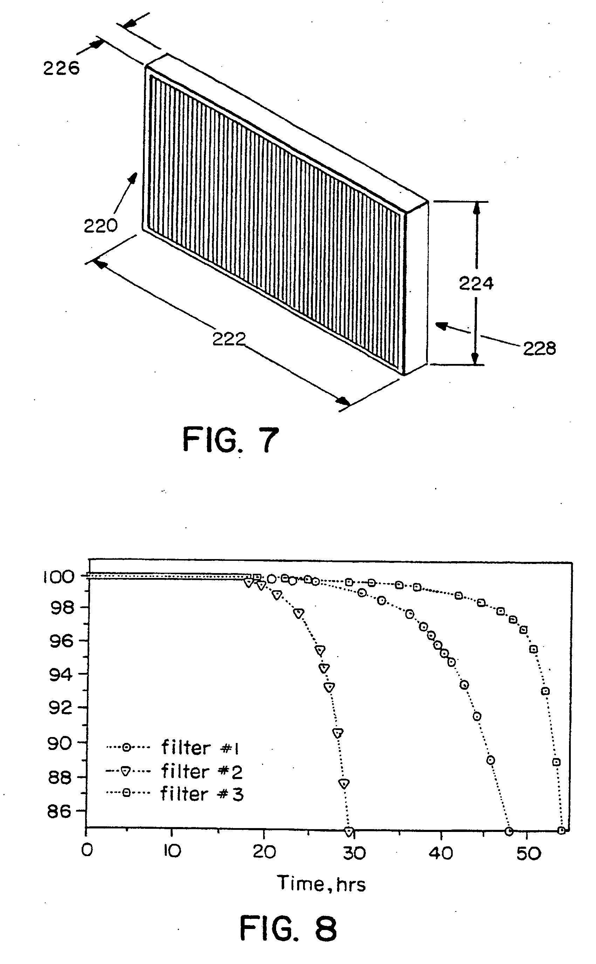

A pleated filter structure 220 using the porous acidic polymer of the present Invention is illustrated in FIG. 7. This is a pleated system open on both sides of a rectangular frame 228 with a length 222, width 224 and depth such that it can be used as a replacement filter in stack filter systems. The filter has a removal efficiency of over 99% at 1000 ppb.

FIG. 8 graphically illustrates the removal efficiency for three different filters. The graphs represent removal efficiency as a function of time at 20 ppm of NH₃ concentration upstream from the filter. Filter size is -12"x12"x6". Air flow is -100 cfm. Considering service life data only, it appears that filter #3 performed best. However, if additional data is considered, the conclusion is not so simple. Pressure drop of filter #1 was 0.2"WC; for filter #2 was 0.3"WC; and for filter #3 was 1.0"WC. Filters #1 and #2 are very close to tool manufacturer's specifications, but #3 creates an excessive pressure drop that interferes with tool's proper ECU functioning. Excessive pressure drop is undesirable for multiple reasons. For example, it increases fan load and power consumption, reduces airflow through the tool and positive pressure inside the enclosure. Thus filter #1 made in accordance with the present invention provided a substantial improvement in service life while providing a pressure drop that is compatible with tool operation.

Another preferred embodiment of the invention involves the fabrication of high surface area filter elements using a three dimensional printing technique as described in U.S. Patent Nos. 5,204,055, 5,340,656, and 5,387,380.

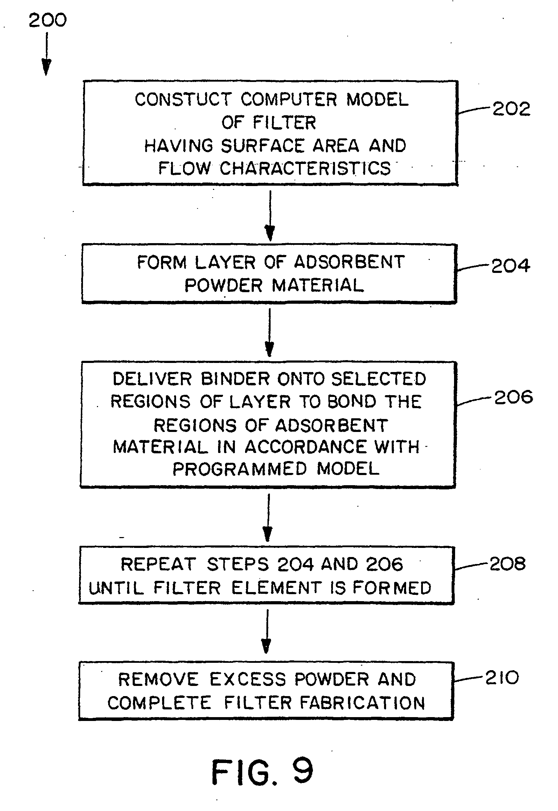

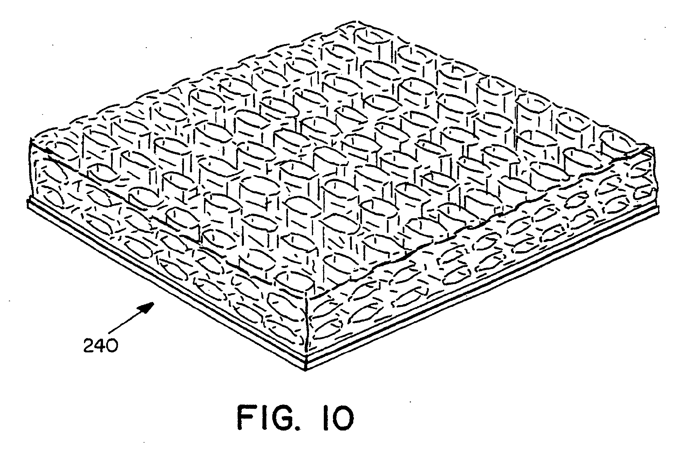

Such a method of fabrication of a filter element is illustrated in connection with FIG. 9. The process 200 includes forming a three dimensional model 202 of the filter element such that the dimensions are well defined. The first layer of the powder material used to form the filter is placed 204 the printer apparatus. A binder is then delivered 206 onto the powder material resulting in the binding of selected regions thereof. Steps 204 and 206 are repeated a number of times until the high surface area filter is formed. Finally, the excess material is removed 210. An illustrative example of a high surface area filter made in accordance with this method is shown in the example 240 of FIG. 10. The binder can be an acid polymerizable or acid cross linkable liquid.

While this invention has been particularly shown and described with references to preferred embodiments thereof, it will be understood by those skilled in the art that various changes in form and details may be made therein without departing from the scope of the invention as defined by the appended claims.

Embodiments of the invention may include the features recited in the following enumerated paragraphs ("paras").
1. A fluid-permeable filter comprising:
   a porous particulate material formed with a copolymer having an acidic functional group such that the group can react with a reagent; and
   a filter element having the porous particulate material.
2. The filter of para 1 wherein the particulate material comprises a porous divinyl benzene styrene copolymer having a sulfonic acid group
3. The filter of para 1 wherein the acidic group has an acidity level of at least 1 milliequivalent/gram.
4. The filter of para 1 wherein the material has a pore size in the range of 50-400 angstroms.
5. The filter of para 1 wherein the acidic functional group comprises a carboxylic acid.
6. The filter of para 1 wherein the filter comprises a pleated filter.
7. The filter of para 1 wherein the filter element has a surface area of 20 m²/g or higher.
8. A porous filter comprising:
   a filter having a porous material selected from the group of particles, threads, yarns, ribbons, fibers or filaments of a polymer,
   the polymer comprising an acid functional group selected from the group consisting of a sulfonic or carboxylic acid.
9. The filter of para 8 wherein the material has an area of 20 m²/g.
10. A method of filtering air for a fabrication facility needing uncontaminated air of high quality, comprising the steps of:
   providing a non-woven carrier material having a top surface and having thermo-plastic fibers of lower fiber density relative to the fiber density of the resultant composite; the woven carrier retaining adsorbent particles of a sulfonated divinyl benzene styrene copolymer;
   flowing air through the filter with the surfaces of said distributed adsorbent particles being exposed for contact with passing air; and
   removing the base contaminants from the air with the sulfonated material.
11. A method for forming a vapor absorptive non-woven air filter comprising thermo-plastic fibers and adsorptive particles, said composite having a fiber density, comprising the steps of:
   providing a non-woven carrier material having a surface and comprising thermo-plastic fibers;
   applying adsorbent particles of an acidic polymer to said surface of said carrier material.
12. The method of para 11 further comprising heating said carrier material and applied adsorbent particles; and
   calendering the heated carrier material with said adsorbent particles distributed therein;
   wherein said heating and calendering steps are performed for a period of time and under a pressure selected to be sufficient for said adsorbent particles to become retained within said heated and calendered carrier material to form a calendered composite having an open fibrous structure of said given fiber density with the surfaces of said distributed adsorbent particles being substantially exposed for contact with air passing through said calendered composite, said resulting non-woven air filter composite being characterized by a pressure drop sufficient for use as an air filter.
13. The method of para 11 wherein the acidic polymer comprises a sulfonated copolymer.
14. The method of para 11 wherein the acidic polymer comprises a carboxylic copolymer.
15. An adsorptive, filter composite comprising:
   a porous sulfonated divinyl benzene styrene copolymer beads having sulfonic acid functional side groups used to remove molecular bases from air.
16. The filter composite of para 15 wherein the filter removes molecular base materials from a semiconductor processing tool
17. The filter composite of para 15 wherein the beads have a surface area of 20 m²/g or greater.
18. The filter composite of para 15 further comprising a binder material.
19. A filter element comprising alternating layers of a powder material and a binder.
20. The filter element of para 19 wherein the binder includes an acid-polymerizable or acid-cross-linkable liquid.
21. The filter element of para 20 wherein the powder material includes divinyl benzene styrene copolymer.
22. The filter element of para 19 wherein the filter element is a component of a semiconductor processing tool.
23. The filter element of para 22 wherein the semiconductor processing tool includes a deep-ultraviolet photolithography device.
24. A method for filtering molecular base contaminants from air in semiconductor processing equipment comprising passing air through a filter element comprising alternating layers of a powder material and a binder.
25. The method of para 24 wherein the binder includes an acid-polymerizable or acid-cross-linkable liquid.
26. The method of para 25 wherein the powder material includes divinyl benzene styrene copolymer.
27. The method of para 26 wherein the air is delivered to a deep-ultraviolet photolithography tool after passing though the filter element.
28. A method for forming a filter element comprising the steps of:
   a) forming a layer of adsorbent powder material;
   b) delivering binder onto selected regions of the layer of adsorbent powder material to bond the regions of adsorbent material in accordance with a programmed model; and
   c) repeating steps (a) and (b) until a filter element matching the programmed model is formed.
29. The method of para 28 wherein the binder includes an acid-polymerizable or acid-cross-linkable liquid.
30. The method of para 29 wherein the powder material includes divinyl benzene styrene copolymer.
31. The method of para 28 further comprising the step of removing excess powder.

## Claims

1. A fluid-permeable filter for a semiconductor processing tool comprising:
a porous material having a plurality of porous sulfonated divinyl benzene styrene copolymer beads having sulfonic acid functional groups such that the sulfonic acid functional groups can react with a base contaminant in a fluid passing through the filter, the filter having a cover in contact with the porous polymer material, the porous material being a porous polymer or selected from the group of particles, threads, yarns, ribbons, fibers or filaments of a polymer.

2. The filter of Claim 1, wherein the acidic groups haves an acidity level of at least 1 milliequivalent/gram.

3. The filter of Claim 1, wherein the filter comprises a pleated filter.

4. The filter of Claim 1, wherein the filter element has a surface area of 20 m²/g or higher.

5. The filter of Claim 1, wherein the cover comprises a non-woven polymer sheet.

6. The filter of Claim 1, wherein the cover forms a laminate structure with the porous material.

7. The filter of Claim 1, further comprising a second cover such that the polymer material is between the cover and the second cover.

8. The filter of Claim 1, wherein the cover comprises a filtering material.

9. The filter of Claim 1, wherein the cover comprises a non-filtering material.

10. The filter of Claim 1, wherein the cover comprises a material selected from the group of non-woven polyester, polyamide or polypropylene.

11. The filter of Claim 1, wherein the sulfonic acid functional groups comprise[[s]] particles having a size in a range of 0.3 -1.2 mm.

12. The filter of Claim 1, wherein the material is selected from the group of particles, threads, yarns, ribbons, fibers or filaments of a polymer and has a surface area of at least 20 m²/g.

13. The filter of Claim 1, wherein the material is selected from the group of particles, threads, yarns, ribbons, fibers or filaments of a polymer and the cover comprises a sheet attached to a first side of the porous material.

14. A method of filtering a fluid in a semiconductor processing tool comprising providing the semiconductor processing tool with a filter as claimed in any one of the preceding claims and passing the fluid including a base contaminant through the filter so that the sulfonic acid functional groups react with the base contaminant

## Patentansprüche

1. Ein flüssigkeitsdurchlässiges Filter für ein Halbleiter-Bearbeitungswerkzeug, bestehend aus:
einem porösen Material mit einer Vielzahl von porösen Perlen, die aus einem sulfonierten Styrol-Divinylbenzol-Copolymer mit Sulfonsäure-Funktionsgruppen bestehen, d ergestalt, dass die Sulfonsäure-Funktionsgruppen mit einem basischen Kontaminanten in einer Flüssigkeit, die das Filter passiert, reagieren können, wobei das Filter eine Deckschicht besitzt, die mit dem porösen Polymermaterial in Kontakt ist, wobei das poröse Material ein poröses Polymer ist oder aus der Gruppe von Partikeln, Fäden, Garnen, Bändern, Fasern oder Filamenten eines Polymers gewählt wird.

2. Das Filter nach Anspruch 1, wobei die sauren Gruppen eine Azidität von mindestens1 Milliäquivalent/ Gramm aufweisen.

3. Das Filter nach Anspruch 1, wobei das Filter ein Plisseefilter umfasst.

4. Das Filter nach Anspruch 1, wobei das Filterelement eine Oberfläche von 20m²/g oder mehr aufweist.

5. Das Filter nach Anspruch 1, wobei die Deckschicht ein Polymer-Vlies beinhaltet.

6. Das Filter nach Anspruch 1, wobei die Deckschicht mit dem porösen Material eine Laminatstruktur bildet.

7. Das Filter nach Anspruch 1, desweiteren beinhaltend eine zweite Deckschicht, so dass sich das Polymermaterial zwischen der [ersten] Deckschicht und der zweiten Deckschicht befindet.

8. Das Filter nach Anspruch 1, wobei die Deckschicht ein Filtermaterial beinhaltet.

9. Das Filter nach Anspruch 1, wobei die Deckschicht ein nicht filterndes Material beinhaltet.

10. Das Filter nach Anspruch 1, wobei die Deckschicht ein Material umfasst, das aus der Gruppe von Polyestervlies, Polyamid oder Polypropylen gewählt wird.

11. Das Filter nach Anspruch 1, wobei die Sulfonsäure-Funktionsgruppe(n) Partikel umfasst (umfassen), deren Größe im Bereich von 0,3 bis 1,2 mm liegt.

12. Das Filter nach Anspruch 1, wobei das Material aus der Gruppe von Partikeln, Fäden, Garnen, Bändern, Fasern oder Filamenten eines Polymers gewählt wird und eine Oberfläche von mindestens 20m²/g aufweist.

13. Das Filter nach Anspruch 1, wobei das Material aus der Gruppe von Partikeln, Fäden, Garnen, Bändern, Fasern oder Filamenten eines Polymers gewählt wird und die Deckschicht eine Schicht beinhaltet, die an einer ersten Seite des porösen Materials angebracht ist.

14. Ein Verfahren zur Filtration einer Flüssigkeit in einem Halbleiter-Bearbeitungswerkzeug, das folgendes umfasst:
- Ausstattung des Halbleiter-Bearbeitungswerkzeugs mit einem Filter, wie in einem der vorangehenden Ansprüche geltend gemacht, und
- Durchleiten der Flüssigkeit einschließlich eines basischen Kontaminanten durch das Filter, so dass es zwischen den Sulfonsäure-Funktionsgruppen und dem basischen Kontaminanten zu einer Reaktion kommt.

## Revendications

1. Filtre perméable à un fluide pour outil de traitement de semi-conducteur comprenant :
un matériau poreux ayant une pluralité de billes de copolymère de divinyle benzène styrène sulfoné poreux ayant des groupes fonctionnels d'acide sulfonique de telle sorte que les groupes fonctionnels d'acide sulfonique peuvent réagir avec un contaminant de base d'un fluide passant à travers le filtre, le filtre ayant un recouvrement en contact avec le matériau de polymère poreux, le matériau poreux étant un polymère poreux ou sélectionné parmi le groupe de particules, cordons, fils, rubans, fibres ou filaments d'un polymère.

2. Filtre selon la revendication 1, dans lequel les groupes acides ont un niveau d'acidité d'au moins un milliéquivalent/gramme.

3. Filtre selon la revendication 1, dans lequel le filtre est constitué d'un filtre plissé.

4. Filtre selon la revendication 1, dans lequel l'élément filtrant a une surface superficielle de 20 m²/g ou plus élevée.

5. Filtre selon la revendication 1, dans lequel le recouvrement est constitué d'une feuille de polymère non-tissé.

6. Filtre selon la revendication 1, dans lequel le recouvrement forme une structure stratifiée avec le matériau poreux.

7. Filtre selon la revendication 1, comprenant de plus un second recouvrement de sorte que le matériau de polymère est situé entre le recouvrement et le second recouvrement.

8. Filtre selon la revendication 1, dans lequel le recouvrement est constitué d'un matériau filtrant.

9. Filtre selon la revendication 1, dans lequel le recouvrement est constitué d'un matériau non filtrant.

10. Filtre selon la revendication 1, dans lequel le recouvrement est constitué d'un matériau sélectionné parmi le groupe constitué de polyester non-tissé, polyamide ou polypropylène.

11. Filtre selon la revendication 1, dans lequel les groupes fonctionnels d'acide sulfonique comprennent des particules ayant une dimension dans la plage de 0,3 à 1,2 mm.

12. Filtre selon la revendication 1, dans lequel le matériau est sélectionné parmi le groupe constitué de particules, cordons, fils, rubans, fibres ou filaments d'un polymère et a une surface superficielle d'au moins 20 m²/g.

13. Filtre selon la revendication 1, dans lequel le matériau est sélectionné parmi le groupe constitué de particules, cordons, fils, rubans, fibres ou filaments d'un polymère et le recouvrement est constitué d'une feuille fixée sur un premier côté du matériau poreux.

14. Procédé de filtration d'un fluide dans un outil de traitement de semi-conducteur comprenant la fourniture à l'outil de traitement de semi-conducteur d'un filtre selon l'une quelconque des revendications précédentes et le passage du fluide comprenant un contaminant de base à travers le filtre de sorte que les groupes fonctionnels d'acide sulfonique réagissent avec le contaminant de base.
